# EUROPEAN PATENT APPLICATION

(11) **EP 4 831 483 A1**
(43) Date of publication of application: **28.10.2026**
(21) Application number: 24905585.6
(22) Date of filing: 14.08.2024
(51) Int. Cl.: F04B 35/04, F04B 39/12

(54) **HOUSING, AIR PUMP, AIR SUSPENSION, AND VEHICLE**

(30) Priority: 22.12.2023 CN 202311791977
(71) Applicant: BYD Company Limited, Shenzhen, Guangdong 518118 (CN)
(72) Inventor: TANG, Jianguo, Shenzhen, Guangdong 518118 (CN); SHEN, Haigen, Shenzhen, Guangdong 518118 (CN); LIANG, Jianrong, Shenzhen, Guangdong 518118 (CN); PENG, Chaoxiong, Shenzhen, Guangdong 518118 (CN); DENG, Xiuhong, Shenzhen, Guangdong 518118 (CN)
(74) Representative: Mathys & Squire
(86) International application number: PCT/CN2024/112077
(87) International publication number: WO 2025/130090

(57) **Abstract**

A housing, an air pump, an air suspension, and a vehicle are provided. The housing is configured for the air pump. The housing is provided with a central space, five cylinder bores, five transfer gas passages, and an outlet passage. The cylinder bore is configured to accommodate a cylinder. Each of the transfer gas passages is configured to communicate with two adjacent cylinder bores, and the five transfer gas passages and the five cylinder bores jointly form a ring-shaped gas passage connected end to end. The outlet passage communicates with any one of the transfer gas passages and an external space. The air pump using the housing has high pumping efficiency.

## Description

This application claims priority to Chinese Patent Application No. 202311791977.5, filed with the China National Intellectual Property Administration on December 22, 2023 and entitled "HOUSING, AIR PUMP, AIR SUSPENSION, AND VEHICLE", which is incorporated herein by reference in its entirety.

### TECHNICAL FIELD

The present invention relates to the field of piston technologies, and in particular, to a housing, an air pump, an air suspension, and a vehicle.

### BACKGROUND

An air suspension includes components such as elastic elements, dampers, and guiding mechanisms. The air suspension is responsible for connecting a vehicle body, a chassis, and wheels of a vehicle, transmitting forces and torques interacting therebetween, and cushioning impacts from a road surface, thereby significantly improving ride comfort and handling.

### TECHNICAL PROBLEM

During operation of an existing air suspension, pumping efficiency of an air pump is low.

### TECHNICAL SOLUTION

An objective of the present invention is to provide a housing, an air pump, an air suspension, and a vehicle, so as to resolve a problem of low pumping efficiency of the air pump.

To implement the objective of the present invention, the present invention provides the following technical solutions:
According to a first aspect, the present invention provides a housing, configured for an air pump, where the housing is provided with:
a central space;
five cylinder bores, one end of each of the five cylinder bores communicating with the central space, the five cylinder bores being spaced apart in a circumferential direction of the central space, and the cylinder bore being configured to accommodate a cylinder;
five transfer gas passages, each of the transfer gas passages being configured to communicate with two adjacent cylinder bores, the five transfer gas passages being arranged in the circumferential direction of the central space, and the five transfer gas passages and the five cylinder bores jointly forming a ring-shaped gas passage connected end to end; and
an outlet passage, communicating with any one of the transfer gas passages and an external space.

In an implementation, the five cylinder bores are centrally symmetric.

In an implementation, the five transfer gas passages are centrally symmetric.

In an implementation, an inner wall surface of the cylinder bore is smoothly blended with an inner wall surface of the central space.

In an implementation, the housing is further provided with five fitting holes. The five fitting holes communicate in one-to-one correspondence with the five cylinder bores. The fitting hole is located at an end of the cylinder bore away from the central space, and the fitting hole is configured to accommodate a cover.

In an implementation, the housing is suitable for being detachably connected to the cover.

In an implementation, the housing is further provided with an accommodating space. The accommodating space is configured for mounting a plurality of solenoid valves. The plurality of solenoid valves correspondingly communicate with the five transfer gas passages, and the solenoid valve is configured to control gas flow through the transfer gas passage.

According to a second aspect, the present invention provides an air pump, including:
the housing according to any one of the implementations of the first aspect; and
five cylinders, accommodated in one-to-one correspondence in the five cylinder bores.

In an implementation, the air pump further includes a drive assembly. The drive assembly extends into the central space, and the five cylinders are all connected to the drive assembly.

In an implementation, the drive assembly includes a connecting rod shaft and an eccentric wheel. The eccentric wheel is connected to the connecting rod shaft. The connecting rod shaft extends into the central space, and the five cylinders are all rotatably connected to the connecting rod shaft.

In an implementation, the air pump further includes a fastening assembly. The fastening assembly is connected to the five cylinders, and the fastening assembly is configured to fasten the cylinders in a radial direction of the connecting rod shaft.

In an implementation, the cylinder includes a piston rod and a hook. The piston rod is rotatably connected to the connecting rod shaft. The hook is connected to the piston rod and forms a slot, and an opening of the slot faces away from the connecting rod shaft.

The fastening assembly includes a snap ring. The snap ring extends in a circumferential direction of the connecting rod shaft and is accommodated in the slot.

In an implementation, the air pump further includes a bearing. The bearing includes an outer race and an inner race that are rotatably connected. The inner race is sleeved on and fixedly connected to the connecting rod shaft, and the outer race is connected to the piston rod.

In an implementation, the piston rod includes a rod body and a connecting portion. The connecting portion is connected to an end portion of the rod body. The connecting portion is connected to the outer race, and the hook is connected to the rod body and/or the connecting portion.

A surface of the connecting portion facing away from the rod body is provided with a connecting groove, and the outer race is accommodated in the connecting groove.

In an implementation, an opening of the connecting groove faces the connecting rod shaft, and a bottom wall surface of the connecting groove is an arc-shaped surface.

In an implementation, a connection between the connecting rod shaft and the eccentric wheel is any one of screwing connection, snap-fit connection, or welding.

In an implementation, the cylinder includes a cylinder body and a piston cup. The piston cup is disposed in the cylinder body. An end of the piston rod away from the connecting rod shaft is connected to the piston cup, and the piston cup is slidably connected to the cylinder body.

In an implementation, the housing is made of any one of a metal material, high-strength plastic, or ceramic.

According to a third aspect, the present invention provides an air suspension. The air suspension includes an elastic element and the air pump according to any one of the implementations of the second aspect. The air pump is configured to compress the elastic element.

According to a fourth aspect, the present invention provides a vehicle. The vehicle includes an axle, a frame, and the air suspension according to the third aspect. The air suspension is configured to connect the axle and the frame.

### BENEFICIAL EFFECTS

A housing of an air pump of the present invention is provided with five cylinder bores and transfer gas passages each communicating with two adjacent cylinder bores. Five cylinders are disposed in the five cylinder bores. During operation of the air pump, gas generated by the five cylinders is collected in a ring-shaped gas passage connected end to end and jointly formed by the five transfer gas passages and the five cylinder bores, and is output through an outlet passage communicating with an external space and the transfer gas passage, thereby greatly improving operating efficiency and pumping efficiency of the air pump.

### BRIEF DESCRIPTION OF DRAWINGS

To describe technical solutions in implementations of the present invention or in conventional technologies more clearly, the following briefly describes the accompanying drawings needed for use in the description of the implementations or the conventional technologies. Clearly, the accompanying drawings in the following description are merely some implementations of the present invention, and a person of ordinary skill in the art may still derive other accompanying drawings from these accompanying drawings without creative efforts.
FIG. 1 is a cross-sectional view of an air pump according to an embodiment;
FIG. 2 is a three-dimensional diagram of an air pump according to an embodiment;
FIG. 3 is a three-dimensional diagram of a partial structure of an air pump according to an embodiment;
FIG. 4 is an exploded view of a partial structure of an air pump according to an embodiment; and
FIG. 5 is a three-dimensional diagram of a cylinder according to an embodiment.

Descriptions of reference numerals:
100: Air pump; 10: Housing; 11: Central space; 12: Cylinder bore; 13: Transfer gas passage; 14: Outlet passage; 15: Fitting hole; 16: Accommodating space; 20: Cylinder; 21: Piston rod; 211: Rod body; 212: Connecting portion; 2121: Connecting groove; 22: Hook; 23: Slot; 24: Cylinder body; 25: Piston cup; 26: Cylinder head; 30: Drive assembly; 31: Connecting rod shaft; 32: Eccentric wheel; 321: Central portion; 322: Moving portion; 323: Connecting space; 324: Mounting space; 33: Mounting portion; 40: Fastening assembly; 41: Snap ring; 42: Protection cover; 421: Through-hole; 50: Bearing; 51: Outer race; 52: Inner race; 53: Rolling element; 60: Cover; 70: Solenoid valve; 80: Sealing member

### IMPLEMENTATIONS OF THIS APPLICATION

The following clearly and completely describes the technical solutions in implementations of the present invention with reference to the accompanying drawings in the implementations of the present invention. Clearly, the described implementations are merely some but not all of implementations of the present invention. Based on the implementations in the present invention, all other implementations obtained by a person of ordinary skill in the art without creative efforts shall fall within the protection scope of the present invention.

It will be noted that when an assembly is referred to as being "fastened to" another assembly, the assembly may be directly on another assembly or there may be an intermediate assembly. When an assembly is considered to be "connected" to another assembly, the assembly may be directly connected to another assembly or there may be an intermediate assembly.

Unless otherwise defined, all technical and scientific terms used in the present invention have the same meaning as those commonly understood by those skilled in the art that belong to the present invention. The terms used in this specification of the present invention are merely intended to describe specific embodiments, and are not intended to limit the present invention. The term "and/or" used in the present invention includes any and all combinations of one or more related listed items.

Some implementations of the present invention are described in detail below with reference to the accompanying drawings. In the case of no conflict, the following embodiments and features in the embodiments may be mutually combined.

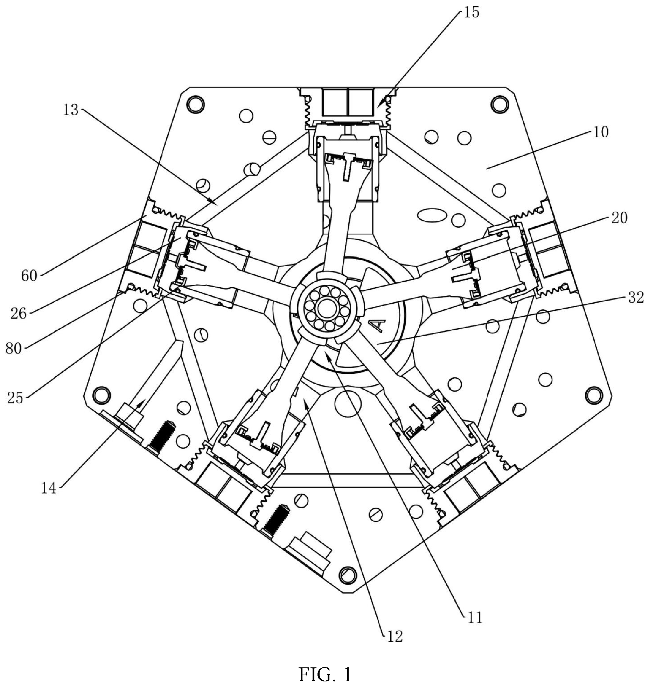

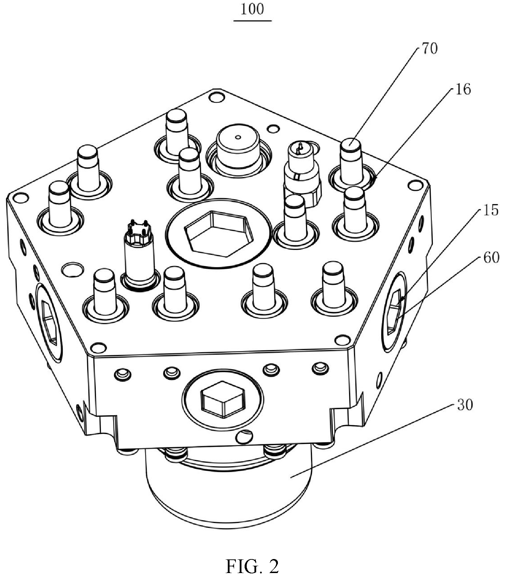

Referring to FIG. 1 and FIG. 2, the present invention provides an air pump 100, including a housing 10 and five cylinders 20. The housing 10 is provided with a central space 11, five cylinder bores 12, five transfer gas passages 13, and an outlet passage 14. One end of each of the five cylinder bores 12 communicates with the central space 11, and the five cylinder bores 12 are spaced apart in a circumferential direction of the central space 11. The cylinder bore 12 is configured to accommodate the cylinder 20. Each of the transfer gas passages 13 is configured to communicate with two adjacent cylinder bores 12. The five transfer gas passages 13 are arranged in the circumferential direction of the central space 11, and the five transfer gas passages 13 and the five cylinder bores 12 jointly form a ring-shaped gas passage connected end to end. The outlet passage 14 communicates with any one of the transfer gas passages 13 and an external space. The five cylinders 20 are accommodated in one-to-one correspondence in the five cylinder bores 12.

The housing 10 is made of a material with relatively high structural strength, and may specifically be made of a metal material, high-strength plastic, ceramic, or the like. The metal material may be, for example, aluminum, aluminum alloy, magnesium alloy, iron, or iron alloy.

The housing 10 is divided into a bottom plate and side plates. The bottom plate is a regular pentagon, and there are five side plates. The housing 10 may be an integral structure, that is, the bottom plate and the side plates are an integral structure formed by an integrated molding process. The integrated molding process may specifically be stamping, casting, or the like, which is not limited herein. The housing 10 may alternatively be a split structure. The side plates and the bottom plate may be connected and fastened by means of welding, bonding, snap-fit connection, screwing connection, or the like. Adjacent side plates may also be connected by means of screwing connection, snap-fit connection, or the like. Wall thicknesses of all positions of the housing 10 may be approximately uniform. In other words, thicknesses of the side plates may be approximately uniform and consistent, and thicknesses of the bottom plate and the side plates may also be approximately the same. The integral structure of the bottom plate and the side plates can improve production efficiency, and the split structure of the bottom plate and the side plates facilitate disassembly and maintenance of the air pump 100.

The transfer gas passage 13 may be a straight pipeline or a curved pipeline, which is not limited herein.

A shape of the central space 11 may be a circle, a rectangle, or the like, which is not limited herein.

When a quantity of cylinder bores 12 and a quantity of cylinders 20 both are less than 5, motor utilization efficiency and pumping efficiency of the air pump 100 are low. When the quantity of cylinder bores 12 and the quantity of cylinders 20 both are greater than 5, air pressure may affect operation of the cylinder 20, which reduces the pumping efficiency of the air pump 100. When the quantity of cylinder bores 12 and the quantity of cylinders 20 both are 5, the motor utilization efficiency of the air pump 100 is high, and the air pressure generated during the operation of the cylinder 20 does not adversely affect the cylinder 20.

The housing 10 of the air pump 100 of the present invention is provided with the five cylinder bores 12 and the transfer gas passages 13 each communicating with two adjacent cylinder bores 12. The five cylinders 20 are disposed in the five cylinder bores 12. During operation of the air pump 100, gas generated by the five cylinders 20 is collected in the ring-shaped gas passage connected end to end and jointly formed by the five transfer gas passages 13 and the five cylinder bores 12, and is output through the outlet passage 14 communicating with the external space and the transfer gas passage 13, thereby greatly improving operating efficiency and pumping efficiency of the air pump 100.

Referring to FIG. 1, in an implementation, the five cylinder bores 12 are centrally symmetric. The five centrally symmetric cylinder bores 12 make a structure of the housing 10 simple, which facilitates manufacturing of the housing 10.

In an implementation, the five transfer gas passages 13 are centrally symmetric. The centrally symmetric transfer gas passages 13 facilitate gas flow, prevent gas pressure in a specific transfer gas passage 13 from being excessively large, and the like, thereby making the structure of the housing 10 simple and facilitating production.

Referring to FIG. 1, in an implementation, an inner wall surface of the cylinder bore 12 is smoothly blended with an inner wall surface of the central space 11.

A wall surface where the cylinder bore 12 is in contact with the central space 11 is an arc-shaped surface, which reduces friction between the cylinder 20 and the cylinder bore 12 and the central space 11 during operation, thereby improving service lives of the cylinder 20 and the air pump 100.

Referring to FIG. 1 and FIG. 2, in an implementation, the housing 10 is further provided with five fitting holes 15. The five fitting holes 15 communicate in one-to-one correspondence with the five cylinder bores 12. The fitting hole 15 is located at an end of the cylinder bore 12 away from the central space 11, and the fitting hole 15 is configured to accommodate a cover 60.

One end of the fitting hole 15 communicates with the cylinder bore 12, and the other end of the fitting hole 15 communicates with the external space.

A sealing member 80 is further included between the cover 60 and the housing 10 to ensure a good sealing effect of the air pump 100.

The fitting hole 15 is provided corresponding to the cylinder bore 12 for accommodating the cover 60, thereby sealing the air pump 100.

In an implementation, the housing 10 is suitable for being detachably connected to the cover 60.

A connection between the cover 60 and the housing 10 may be screwing connection, snap-fit connection, or the like, which is not limited herein. Specifically, the housing 10 is provided with a threaded hole, and the cover 60 is provided with a threaded member that fits with the threaded hole.

The cover 60 of the air pump 100 of the present invention is detachable, which facilitates replacement of a vulnerable component within the air pump 100, thereby improving service life of the air pump 100.

Referring to FIG. 2, in an implementation, the housing 10 is further provided with accommodating spaces 16. The accommodating spaces 16 are configured for mounting a plurality of solenoid valves 70. The plurality of solenoid valves 70 correspondingly communicate with the five transfer gas passages 13, and the solenoid valve 70 is configured to control gas flow through the transfer gas passage 13.

There are a plurality of accommodating spaces 16, and the accommodating space 16 may alternatively be configured for mounting a sensor.

The solenoid valves 70 are connected to a control board and are configured to control gas flow through the transfer gas passages 13.

Referring to FIG. 1 and FIG. 2, in an implementation, the air pump 100 further includes a drive assembly 30. The drive assembly 30 extends into the central space 11, and the five cylinders 20 are all connected to the drive assembly 30.

The drive assembly 30 may fully extend into the housing 10, or may partially extend into the housing 10.

The solenoid valves 70 and the drive assembly 30 are respectively located on two opposite sides of the housing 10, so that the solenoid valves 70 are connected to the control board located below the air pump 100, thereby reducing an assembly operating space of the air pump 100 and lowering costs.

The drive assembly 30 may be motor-driven, hydraulically driven, or the like, which is not limited herein. The drive assembly 30 includes a drive member and a drive rod, and the drive member is configured to drive the drive rod to move.

The drive assembly 30 may be further fixed relative to the central space 11, and the drive assembly 30 drives the cylinders 20 to move relative to the drive assembly 30.

Movement of the five cylinders 20 in the air pump 100 is implemented by sharing one drive assembly 30, thereby achieving an effect of reducing production costs.

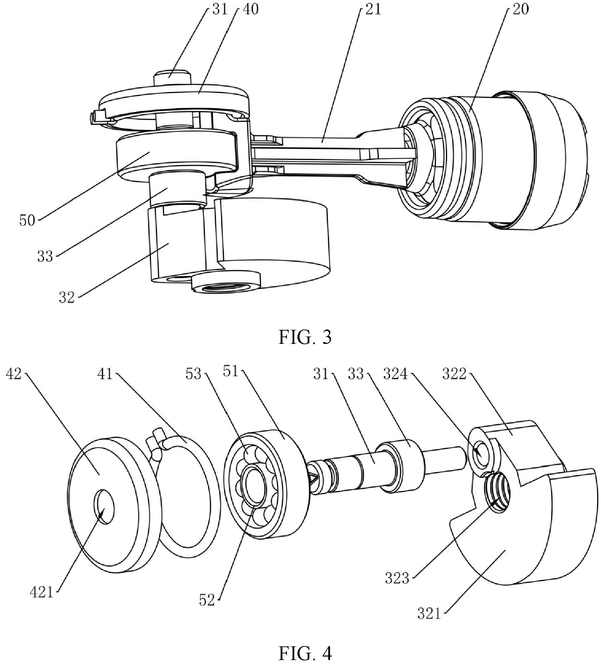

Referring to FIG. 1 and FIG. 3, in an implementation, the drive assembly 30 includes a connecting rod shaft 31 and an eccentric wheel 32. The eccentric wheel 32 is connected to the connecting rod shaft 31. The connecting rod shaft 31 extends into the central space 11, and the five cylinders 20 are all rotatably connected to the connecting rod shaft 31.

The five cylinders 20 are evenly spaced apart in a circumferential direction of the connecting rod shaft 31.

The eccentric wheel 32 is in a structure of a cam. The eccentric wheel 32 includes a central portion 321 and a moving portion 322. The central portion 321 is connected to the moving portion 322. The central portion 321 may be fan-shaped, and a cross section of the moving portion 322 may be circular. The central portion 321 is provided with a connecting space 323. The drive rod passes through the connecting space 323 and is mounted on and fastened to the eccentric wheel 32. The drive rod drives the eccentric wheel 32 to move. A connection between the eccentric wheel 32 and the drive rod may be screwing connection. Specifically, the connecting space 323 may be a threaded hole, and a thread is provided at a position where the drive rod is connected to the connecting space 323.

The moving portion 322 is provided with a mounting space 324. The connecting rod shaft 31 passes through the mounting space 324 and is mounted on and fastened to the eccentric wheel 32. The drive rod drives the eccentric wheel 32 to move, and the eccentric wheel 32 drives the connecting rod shaft 31 and the cylinders 20 connected to the connecting rod shaft 31 to move. A connection between the connecting rod shaft 31 and the eccentric wheel 32 may be screwing connection, snap-fit connection, welding, or the like, which is not limited herein.

The connecting rod shaft 31 and the eccentric wheel 32 are made of a material with relatively high structural strength, and may specifically be made of a metal material, high-strength plastic, ceramic, or the like. The metal material may be, for example, aluminum, aluminum alloy, magnesium alloy, iron, or iron alloy, which is not limited herein.

After the drive assembly 30 is started, the five cylinders 20 work simultaneously. An increase in a quantity of cylinders 20 of an air suspension greatly improves pumping efficiency of the air pump 100, and the five cylinders 20 share one drive assembly 30, so as to achieve the effect of reducing production costs.

Referring to FIG. 3 and FIG. 4, in an implementation, the air pump 100 further includes a fastening assembly 40. The fastening assembly 40 is connected to the five cylinders 20, and the fastening assembly 40 is configured to fasten the cylinders 20 in a radial direction of the connecting rod shaft 31.

The air pump 100 of the present invention is provided with the five cylinders 20 and the fastening assembly 40. When the air pump 100 operates, a partial structure of the five cylinders 20 is connected to the eccentric wheel 32 to perform orbital movement around the connecting rod shaft 31. The fastening assembly 40 fastens the cylinders 20 in the radial direction of the connecting rod shaft 31, so as to prevent the cylinder 20 and the connecting rod shaft 31 from falling off during high-speed operation of the air pump 100, thereby improving connection stability of the air pump 100 and improving safety of the air pump 100.

Referring to FIG. 3, FIG. 4, and FIG. 5, in an implementation, the cylinder 20 includes a piston rod 21 and a hook 22. The piston rod 21 is rotatably connected to the connecting rod shaft 31. The hook 22 is connected to the piston rod 21 and forms a slot 23, and an opening of the slot 23 faces away from the connecting rod shaft 31. The fastening assembly 40 includes a snap ring 41. The snap ring 41 extends in the circumferential direction of the connecting rod shaft 31 and is accommodated in the slot 23.

The snap ring 41 may be connected end to end, or may not be connected between ends of the snap ring, which is not limited herein. The snap ring 41 may be a spring buckle or a spring ring. A material of the snap ring 41 may be rubber, plastic, nylon, or the like that has specific elastic deformation performance, which is not limited herein.

The hook 22 is disposed at an end of the piston rod 21 close to the connecting rod shaft 31. A bottom wall of the slot 23 is an arc-shaped surface, which is used to reduce friction between the slot 23 and the snap ring 41, thereby improving the service life of the snap ring 41. The snap ring 41 is accommodated in the slot 23, and there is a spacing between the snap ring 41 and a top surface of the slot 23.

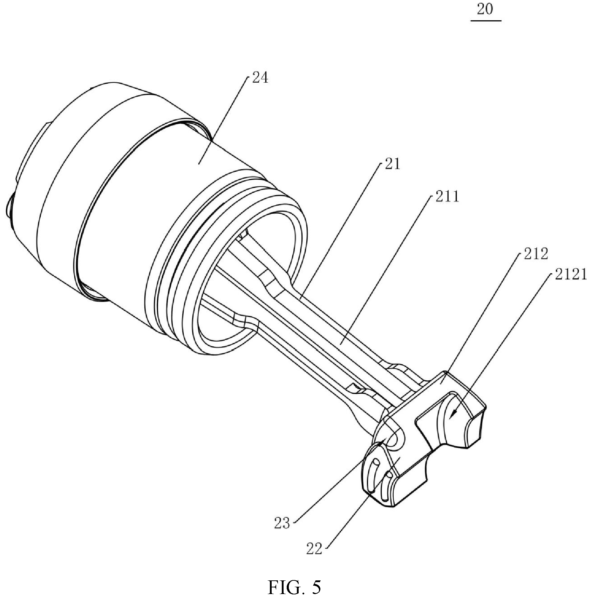

Referring to FIG. 4 and FIG. 5, in an implementation, the hook 22 has a protrusion. The protrusion faces away from the connecting rod shaft 31, and a gap exists between the protrusion and the piston rod 21. A gap between the piston rod 21 and the connecting rod shaft 31 forms the slot 23. The opening of the slot 23 faces away from the connecting rod shaft 31, and the snap ring 41 is accommodated in the slot 23.

The snap ring 41 is accommodated in the slots 23 of the five cylinders 20, to fasten a plurality of cylinders 20 in the radial direction of the connecting rod shaft 31, thereby preventing the cylinder 20 and the connecting rod shaft 31 from falling off during high-speed movement of the air pump 100, enhancing connection stability of the air pump 100, and improving safety of the air pump 100.

Referring to FIG. 4, in an implementation, the air pump 100 further includes a bearing 50. The bearing 50 includes an outer race 51 and an inner race 52 that are rotatably connected. The inner race 52 is sleeved on and fixedly connected to the connecting rod shaft 31, and the outer race 51 is connected to the piston rod 21.

The bearing 50 further includes rolling elements 53 and a cage. The rolling elements 53 are disposed between the inner race 52 and the outer race 51, and are configured to bear a load between the inner race 52 and the outer race 51. The cage is configured to separate the rolling elements 53 to reduce friction, uniformly distribute the rolling elements 53 to optimize the load, and guide unloaded rolling elements 53, thereby ensuring that the rolling elements 53 do not scatter during mounting or disassembly of the bearing 50.

The drive assembly 30 further includes a mounting portion 33, and the mounting portion 33 is annular. The mounting portion 33 is sleeved on the connecting rod shaft 31 and is connected and fastened to the connecting rod shaft 31. A radial size of the mounting portion 33 is larger than a radial size of the connecting rod shaft 31. One end of the mounting portion 33 abuts against the outer race 51 of the bearing 50, and an end of the mounting portion 33 away from the outer race 51 is connected to the central portion 321 of the eccentric wheel 32. The mounting portion 33 is provided so that a gap exists between the cylinder 20 and the eccentric wheel 32 in an axial direction of the eccentric wheel 32. When the cylinder 20 moves, contact friction between the piston rod 21 and the eccentric wheel 32 decreases, and the service life of the air pump 100 is improved.

The bearing 50 is provided, the outer race 51 of the bearing 50 is connected to the piston rod 21, and the inner race 52 of the bearing 50 is fastened to the connecting rod shaft 31. In this way, the piston rod 21 can rotate relative to the connecting rod shaft 31, which provides a buffering effect to some extent in a movement process of the air pump 100.

Referring to FIG. 4 and FIG. 5, in an implementation, the piston rod 21 includes a rod body 211 and a connecting portion 212. The connecting portion 212 is connected to an end portion of the rod body 211. The connecting portion 212 is connected to the outer race 51, and the hook 22 is connected to the rod body 211 and/or the connecting portion 212. A surface of the connecting portion 212 facing away from the rod body 211 is provided with a connecting groove 2121, and the outer race 51 is accommodated in the connecting groove 2121.

A cross section of the rod body 211 may be rectangular, circular, trapezoidal, or the like, which is not limited herein.

The rod body 211, the connecting portion 212, and the hook 22 may be an integral structure, which may be an integral structure prepared by processes such as stamping and grinding.

An end surface of the hook 22 close to the connecting rod shaft 31 may be flush with or may not be flush with an end surface of the connecting portion 212 close to the connecting rod shaft 31. An end surface of the hook 22 away from the connecting rod shaft 31 may be flush with or may not be flush with an end surface of the connecting portion 212 away from the connecting rod shaft 31. This is not limited herein.

When the hook 22 is connected to the rod body 211, the hook 22 and the connecting portion 212 may be connected and fastened to two opposite side surfaces of the rod body 211.

When the hook 22 is connected to the connecting portion 212, a side wall surface of the slot 23 may be connected to the connecting portion 212, and the connecting portion 212 is connected to the rod body 211.

The end surface of the hook 22 close to the connecting rod shaft 31 may be an arc-shaped surface, and the end surface of the connecting portion 212 close to the connecting rod shaft 31 may also be an arc-shaped surface. In addition, a gap exists between the hook 22 and the connecting rod shaft 31, and a gap exists between the connecting portion 212 and the mounting portion 33. This reduces friction generated between the hook 22 and the connecting rod shaft 31, and between the connecting portion 212 and the mounting portion 33, thereby improving service life of each component in the air pump 100.

An opening of the connecting groove 2121 faces the connecting rod shaft 31. A bottom wall surface of the connecting groove 2121 is an arc-shaped surface, which is used to reduce friction between the connecting groove 2121 and the outer race 51 of the bearing 50, thereby improving service life of the bearing 50. A side wall surface of the connecting groove 2121 may be one end of the hook 22.

While the hook 22 is connected to the fastening assembly 40, the connecting portion 212 is provided to be connected to the outer race 51 of the bearing 50, so that the piston rod 21 is connected to the eccentric wheel 32 to perform orbital movement around the connecting rod shaft 31 without falling off from the connecting rod shaft 31, thereby improving structural stability of the air pump 100. The connecting groove 2121 is configured to connect the outer race 51 of the bearing 50 to the piston rod 21, so that during operation of the air pump 100, the piston rod 21 is connected to the eccentric wheel 32 to perform orbital movement around the connecting rod shaft 31, and friction between the piston rod 21 and the bearing 50 is reduced.

Referring to FIG. 4, in an implementation, the fastening assembly 40 further includes a protection cover 42, and the protection cover 42 covers the snap ring 41 and the hooks 22 of the five cylinders 20.

A cross section of the protection cover 42 is circular. The protection cover 42 is provided with a through-hole 421, and the connecting rod shaft 31 passes through the through-hole 421.

The protection cover 42 covers the snap ring 41 and the hooks 22 of the five cylinders 20, which can prevent the snap ring 41 from being separated from the hooks 22, thereby providing a double fastening effect and preventing the piston rod 21 from falling off during high-speed movement.

Referring to FIG. 1 and FIG. 3, in an implementation, the cylinder 20 includes a cylinder body 24 and a piston cup 25. The piston cup 25 is disposed in the cylinder body 24. An end of the piston rod 21 away from the connecting rod shaft 31 is connected to the piston cup 25, and the piston cup 25 is slidably connected to the cylinder body 24.

The cylinder body 24 is a hollow tubular structure. The cylinder body 24 is made of a material with relatively high structural strength, and may specifically be made of a metal material, high-strength plastic, ceramic, or the like. The metal material may be, for example, aluminum, aluminum alloy, magnesium alloy, iron, or iron alloy, which is not limited herein. The cylinder body 24 may be an integral structure formed by an integrated molding process. The integrated molding process may specifically be stamping, casting, or the like, which is not limited herein.

A material of the piston cup 25 may be plastic, rubber, or the like that has specific elasticity, a compression deformation property, and wear resistance, which is not limited herein. The piston cup 25 may be an integral structure formed by integral injection molding.

The piston cup 25 may be classified into a bowl-shaped piston cup 25 and a ring-shaped piston cup 25 based on a cross-sectional shape of the cylinder body 24, and may specifically be of a liquid guide bowl type, a liquid guide ring type, a pressure bearing ring type, a positioning ring type, a "C" type, an anti-hole type, or the like, which is not limited herein.

Referring to FIG. 1, in an implementation, the cylinder 20 further includes a cylinder head 26. The cylinder head 26 is connected to an end of the cylinder body 24 away from the connecting rod shaft 31. A seal ring is further provided between the cylinder head 26 and the cylinder body 24 to enhance a sealing effect of the cylinder 20. When the air pump 100 compresses gas, the piston rod 21 drives the piston cup 25 to move toward the cylinder head 26.

During operation of the cylinder 20, the drive assembly 30 drives the piston rod 21 to drive the piston cup 25 to move relative to the cylinder body 24. The piston cup 25 is disposed inside the cylinder body 24 to ensure that the cylinder 20 has a specific return capability and sealing ability during use of the cylinder, thereby preventing backflow of air during operation of the air pump 100.

The present invention provides an air suspension, including an elastic element and the air pump 100 according to any one of the foregoing implementations. The air pump 100 is configured to compress the elastic element.

The air suspension further includes a damping element, an air supply unit, a controller, and a sensor. The elastic element may be a coil spring, a leaf spring, an air spring, or the like, and is configured for cushioning, vibration damping, load bearing, and the like. The damping element is configured to cooperate with the elastic element to dampen vibrations and improve ride comfort on the rough road. The air supply unit includes the air pump 100, a distribution valve, a mount, or the like, and is configured to adjust an expansion and contraction state of the elastic element. The controller and the sensor are configured to control the air supply unit and a damper in real time, so as to adjust stiffness of the air spring and a damping force of the damper, and transmit a vehicle state. The air suspension uses the air pump 100 of the present invention. During operation of the air pump 100, a partial structure of the five cylinders 20 is connected to the eccentric wheel 32 to perform orbital movement around the connecting rod shaft 31. Gas generated by the five cylinders 20 is collected in the ring-shaped gas passage connected end to end and jointly formed by the five transfer gas passages 13 and the five cylinder bores 12, and is output through the outlet passage 14 communicating with the external space and the transfer gas passage 13, so that pumping efficiency of the air pump 100 is improved. In addition, the five cylinders 20 and the drive assembly 30 are fastened by the fastening assembly 40, so that structural stability of the air pump 100 is improved, and operating efficiency and stability of the corresponding air suspension are also greatly improved. In addition, the cover 60 of the air pump 100 is detachable, which facilitates replacement of a vulnerable component within the air pump 100, thereby improving the service life of the air suspension.

The present invention provides a vehicle, including an axle, a frame, and the air suspension according to any one of the foregoing implementations. The air suspension is configured to connect the axle and the frame. The vehicle may be a rail vehicle or a road vehicle, which is not limited herein. The air suspension used in the vehicle can cushion an impact transmitted from a road surface, thereby significantly improving ride comfort and handling.

In the description of the embodiments of the present invention, it will be noted that the orientation or positional relationship indicated by the terms "center", "upper", "lower", "left", "right", "vertical", "horizontal", "inner", "outer", and the like, is an orientation or positional relationship described based on the accompanying drawings, and is only for ease of describing the present invention and simplifying the descriptions, rather than indicating or implying that the apparatus or element referred to must have a specific orientation or be constructed and operated in a specific orientation, and therefore will not be understood as a limitation on the present invention.

The foregoing disclosure is merely a preferred embodiment of the present invention. Certainly, the scope of rights of the present invention cannot be limited thereto. A person of ordinary skill in the art will understand that all or some of procedures for implementing the foregoing embodiments and equivalent modifications made according to the claims of the present invention shall fall within the scope of the present invention.

## Claims

1. A housing, configured for an air pump, wherein the housing is provided with:
a central space;
five cylinder bores, one end of each of the five cylinder bores communicating with the central space, the five cylinder bores being spaced apart in a circumferential direction of the central space, and the cylinder bore being configured to accommodate a cylinder;
five transfer gas passages, each of the transfer gas passages being configured to communicate with two adjacent cylinder bores, the five transfer gas passages being arranged in the circumferential direction of the central space, and the five transfer gas passages and the five cylinder bores jointly forming a ring-shaped gas passage connected end to end; and
an outlet passage, communicating with any one of the transfer gas passages and an external space.

2. The housing according to claim 1, wherein the five cylinder bores are centrally symmetric.

3. The housing according to claim 1, wherein the five transfer gas passages are centrally symmetric.

4. The housing according to claim 1, wherein an inner wall surface of the cylinder bore is smoothly blended with an inner wall surface of the central space.

5. The housing according to claim 1, wherein the housing is further provided with five fitting holes, the five fitting holes communicate in one-to-one correspondence with the five cylinder bores, the fitting hole is located at an end of the cylinder bore away from the central space, and the fitting hole is configured to accommodate a cover.

6. The housing according to claim 5, wherein the housing is suitable for being detachably connected to the cover.

7. The housing according to claim 1, wherein the housing is further provided with an accommodating space, the accommodating space is configured for mounting a plurality of solenoid valves, the plurality of solenoid valves correspondingly communicate with the five transfer gas passages, and the solenoid valve is configured to control gas flow through the transfer gas passage.

8. An air pump, comprising:
the housing according to any one of claims 1 to 7; and
five cylinders, accommodated in one-to-one correspondence in the five cylinder bores.

9. The air pump according to claim 8, wherein the air pump further comprises a drive assembly, the drive assembly extends into the central space, and the five cylinders are all connected to the drive assembly.

10. The air pump according to claim 9, wherein the drive assembly comprises a connecting rod shaft and an eccentric wheel, the eccentric wheel is connected to the connecting rod shaft, the connecting rod shaft extends into the central space, and the five cylinders are all rotatably connected to the connecting rod shaft.

11. The air pump according to claim 10, wherein the air pump further comprises a fastening assembly, the fastening assembly is connected to the five cylinders, and the fastening assembly is configured to fasten the cylinders in a radial direction of the connecting rod shaft.

12. The air pump according to claim 11, wherein the cylinder comprises a piston rod and a hook, the piston rod is rotatably connected to the connecting rod shaft, the hook is connected to the piston rod and forms a slot, and an opening of the slot faces away from the connecting rod shaft; and
the fastening assembly comprises a snap ring, the snap ring extending in a circumferential direction of the connecting rod shaft and being accommodated in the slot.

13. The air pump according to claim 12, wherein the air pump further comprises a bearing, the bearing comprises an outer race and an inner race that are rotatably connected, the inner race is sleeved on and fixedly connected to the connecting rod shaft, and the outer race is connected to the piston rod.

14. The air pump according to claim 13, wherein the piston rod comprises a rod body and a connecting portion, the connecting portion is connected to an end portion of the rod body, the connecting portion is connected to the outer race, and the hook is connected to the rod body and/or the connecting portion; and
a surface of the connecting portion facing away from the rod body is provided with a connecting groove, and the outer race is accommodated in the connecting groove.

15. The air pump according to claim 14, wherein an opening of the connecting groove faces the connecting rod shaft, and a bottom wall surface of the connecting groove is an arc-shaped surface.

16. The air pump according to claim 10, wherein a connection between the connecting rod shaft and the eccentric wheel is any one of screwing connection, snap-fit connection, or welding.

17. The air pump according to claim 12, wherein the cylinder comprises a cylinder body and a piston cup, the piston cup is disposed in the cylinder body, an end of the piston rod away from the connecting rod shaft is connected to the piston cup, and the piston cup is slidably connected to the cylinder body.

18. The air pump according to claim 8, wherein the housing comprises any one of a metal material, plastic, or ceramic.

19. An air suspension, comprising an elastic element and the air pump according to any one of claims 8 to 18, the air pump being configured to compress the elastic element.

20. A vehicle, comprising an axle, a frame, and the air suspension according to claim 19, the air suspension being configured to connect the axle and the frame.
